# EUROPEAN PATENT SPECIFICATION

(11) **EP 3 657 117 B1**
(45) Date of publication and mention of the grant of the patent: **13.03.2024**
(21) Application number: 18836086.1
(22) Date of filing: 04.06.2018
(51) Int. Cl.: F28F 9/02, B23K 1/00, B23K 1/008, F28D 1/053, F28F 1/32, F28D 1/04

(54) **HEAT-EXCHANGER MANUFACTURING METHOD, HEAT-EXCHANGER OVERLAYING METHOD, HEAT EXCHANGER AND MULTI-ROW HEAT EXCHANGER**
VERFAHREN ZUR HERSTELLUNG EINES WÄRMETAUSCHERS, VERFAHREN ZUR ÜBERLAGERUNG EINES WÄRMETAUSCHERS, WÄRMETAUSCHER UND MEHRREIHIGER WÄRMETAUSCHER
PROCÉDÉ DE FABRICATION D'ÉCHANGEUR DE CHALEUR, PROCÉDÉ DE SUPERPOSITION D'ÉCHANGEUR DE CHALEUR, ÉCHANGEUR DE CHALEUR ET ÉCHANGEUR DE CHALEUR À RANGÉES MULTIPLES

(30) Priority: 21.07.2017 JP 2017141430
(43) Date of publication of application: 27.05.2020
(73) Proprietor: Hitachi-Johnson Controls Air Conditioning, Inc., Tokyo 105-0022 (JP)
(72) Inventor: ENDO, Takeshi, Tokyo 105-0022 (JP); HOUFUKU, Mamoru, Tokyo 105-0022 (JP); OKI, Nagatoshi, Tokyo 105-0022 (JP); TADA, Shuuhei, Tokyo 105-0022 (JP)
(74) Representative: MERH-IP Matias Erny Reichl Hoffmann Patentanwälte PartG mbB
(86) International application number: PCT/JP2018/021327
(87) International publication number: WO 2019/017093

(56) References cited:
- WO-A1-2015/025365
- WO-A1-2015/025365
- WO-A1-2018/128035
- WO-A1-2019/150851
- JP-A- H04 177 091
- JP-A- 2002 139 282
- JP-A- 2002 139 282
- JP-A- 2003 311 353
- JP-A- 2010 156 525
- JP-A- 2016 084 994
- JP-A- 2016 099 100
- US-A1- 2017 144 261

## Description

### TECHNICAL FIELD

The present invention relates to a heat exchanger manufacturing method, a heat exchanger stacking method, a heat exchanger, and a multi-row heat exchanger.

### BACKGROUND ART

A background art in the art includes JP-A-2015-55398 (Patent Literature 1), JP-A-2002-139282 (Patent Literature 2) and WO-A1-2015-025365 (Patent Literature 3). Patent Literature 1 describes that after a heat exchanger body, a header pipe assembly, and a connection pipe have been temporarily assembled together, a main pipe portion and two branched pipe portions are joined to each other by furnace brazing in a state in which two branched pipe portions are arranged horizontally. Patent Literature 2 describes a method that through the multitude of sheet type fins arranged in parallel and flat type heat transfer tubes inserted from the upstream side of air flow into groove holes to braze the tube to the fin to manufacture the heat exchanger that is miniaturized in size, reduced in a ventilating resistance and excellent in heat transfer performance. Patent Literature 3 describes a method that through the multitude of sheet type fins arranged in parallel and flat type heat transfer tubes inserted from the upstream side of air flow into groove holes to braze the tube to the fin to manufacture the heat exchanger that is miniaturized in size, reduced in a ventilating resistance and excellent in heat transfer performance.

### CITATION LIST

### PATENT LITERATURE

Patent Literature 1: JP-A-2015-55398
Patent Literature 2: JP-A-2002-139282
Patent Literature 3: WO-A1-2015-025365

### SUMMARY OF THE INVENTION

### PROBLEMS TO BE SOLVED BY THE INVENTION

A heat exchanger has been known, which includes multiple plate-shaped fins arranged in parallel, heat transfer pipes provided at the fins, and headers coupling heat transfer pipe end portions. For manufacturing such a heat exchanger, furnace brazing is performed with these members being temporarily assembled, and therefore, the heat exchanger in a lying state is placed on a conveyer. However, in this case, there is such a defect that the fins, the heat transfer pipes, or the headers are brazed in a state shifted from original positions depending on the degree of load application due to the way to bring the fins and the headers into contact with a conveyer surface. For this reason, an object of the present invention is to provide a heat exchanger manufacturing method and a heat exchanger configured such that each member is less shifted from an original position even upon joint by furnace brazing.

### SOLUTIONS TO THE PROBLEMS

To solve the above-described problem, the present invention is a heat exchanger manufacturing method for manufacturing a heat exchanger by brazing of multiple heat transfer pipes, multiple fins, and headers. The heat exchanger includes the multiple fins arranged in a thickness direction, the multiple heat transfer pipes joined to each fin with the heat transfer pipes each being inserted into cutout recessed portions as cutouts of side portions of the fins on one side, and the headers each joined to both end portions of each heat transfer pipe to couple the multiple heat transfer pipes and having internal spaces for collecting or distributing fluid flowing in the multiple heat transfer pipes. The method includes: a first step of assembling the heat transfer pipes, the fins, and the headers to form an assembled member and setting such that a protruding length Tf of a protruding portion of each fin from a corresponding one of the heat transfer pipes and a distance Th from each heat transfer pipe to an outer surface of a corresponding one of the headers on the same side as a the protruding portion are substantially equal to each other; a second step of placing, after the first step, the assembled member on a conveyer with the protruding length Tf side and the distance Th side facing down; and a third step of conveying, after the second step, the assembled member into a furnace by the conveyer to heat the assembled member, thereby performing brazing of the assembled member.

### EFFECTS OF THE INVENTION

According to the present invention, the method for manufacturing the heat exchanger configured such that each member is less shifted from the original position even upon joint by furnace brazing can be provided.

### BRIEF DESCRIPTION OF THE DRAWINGS

Fig. 1 includes a perspective view (a) of an entire configuration of a heat exchanger as a first embodiment of the present invention and a side view (b) illustrating a situation where a heat transfer pipe is inserted into a fin.
Fig. 2 is a front view of a main portion in a state in which the heat exchanger is placed on a conveyer at a manufacturing step in the first embodiment of the present invention.
Fig. 3 includes perspective views (a), (b) of a configuration example of a header of a heat exchanger as a second embodiment of the present invention and a front view (c) illustrating a state in which the heat exchanger is placed on a conveyer at a manufacturing step.
Fig. 4 is a front view of a main portion in a state in which the heat exchanger is placed on the conveyer at the manufacturing step, Fig. 4 illustrating a variation of the second embodiment of the present invention.
Fig. 5 is a front view of the main portion in a state in which the heat exchanger is placed on the conveyer at the manufacturing step, Fig. 5 illustrating another variation of the second embodiment of the present invention.
Fig. 6 is a perspective view of a main portion of a heat exchanger as a third embodiment of the present invention.
Fig. 7 includes front views (a), (b) of a main portion of a multi-row heat exchanger as a fourth embodiment of the present invention.
Fig. 8 includes a perspective view (a) and an upper view (b) of the entirety of the multi-row heat exchanger as the fourth embodiment of the present invention.
Fig. 9 includes front views (a), (b) of a main portion of a variation of the multi-row heat exchanger as the fourth embodiment of the present invention.

### DESCRIPTION OF EMBODIMENTS

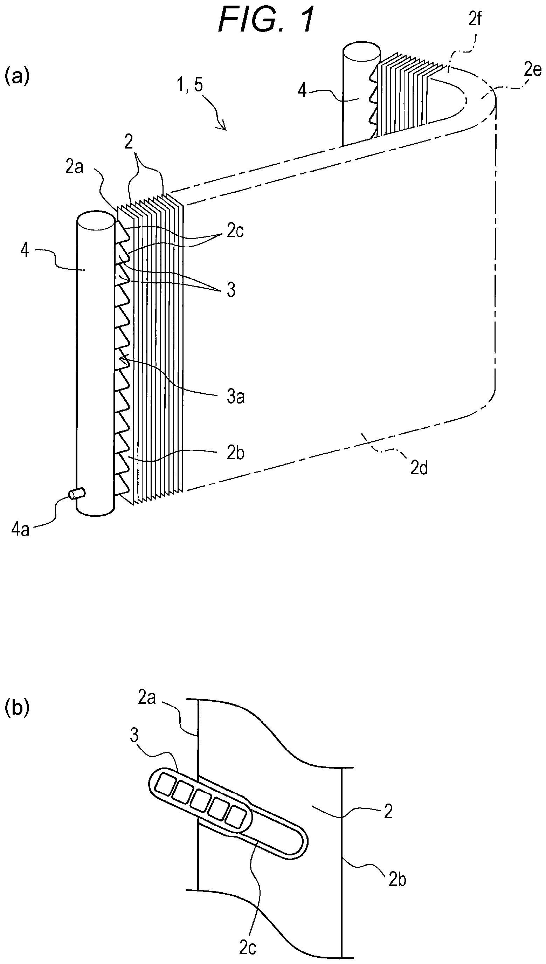

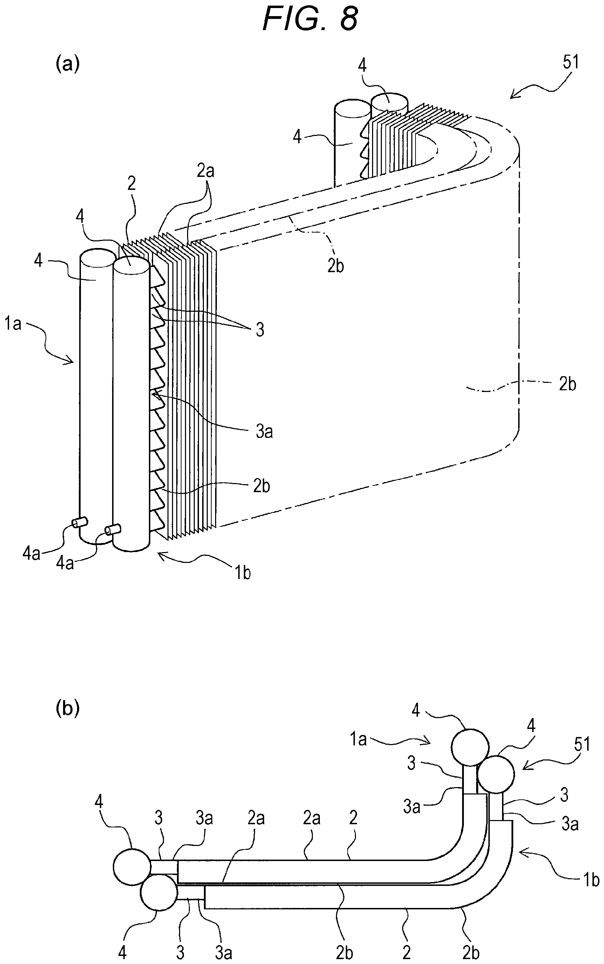

Hereinafter, embodiments of the present invention will be described with reference to the drawings. Note that only main portions are illustrated in each figure for the sake of convenience of description, except for Figs. 1(a) and 8.

### [First Embodiment]

Fig. 1(a) is a perspective view of a heat exchanger as one embodiment of the present invention. A heat exchanger 1 of the present embodiment includes many plate-shaped fins 2 arranged in a thickness direction. Heat transfer pipes (flat pipes) 3 having, e.g., a flat section in a radial direction are joined to each fin 2 with each heat transfer pipe 3 being inserted into a cutout recessed portion 2c as a cutout of one side portion 2a of each fin 2 (also see Fig. 1(b)). Thus, the fin 2 protrudes from the heat transfer pipe 3 on one side of each fin 2 (a protruding portion 2b), but does not protrude from the heat transfer pipe 3 on the other side (the side portion 2a). The heat transfer pipe 3 is configured such that a longitudinal direction thereof is substantially perpendicular to a plate width direction of each fin 2. The multiple heat transfer pipes 3 are, for example, arranged at equal intervals in an upper-to-lower direction. Moreover, in this example, the heat transfer pipes 3 are equally inclined downward toward a windward side in the flow of air targeted for heat exchange with fluid (refrigerant) flowing in the heat exchanger 1.

Tubular headers 4 are each arranged at both end portions of each of the multiple heat transfer pipes 3. An end portion of each heat transfer pipe 3 is joined to the header 4 with the heat transfer pipe 3 being inserted into the header 4. Each header 4 has an internal space for collecting or distributing fluid flowing in the multiple heat transfer pipes 3 such that the heat transfer pipes 3 are coupled to each other. A fluid outlet/inlet pipe 4a for fluid is provided at a side portion of the header 4. A section 3a of the heat transfer pipe 3 where no fins 2 are provided across a predetermined distance is present between each header 4 and the fin 2. Moreover, Fig. 1 illustrates an example where arrangement of the heat transfer pipes 3 and the fins 2 is curved in an L-shape. This is a completed product, and arrangement of the heat transfer pipes 3 and the fins 2 is in a linear shape upon the process of assembling the heat transfer pipes 3, the fins 2, and the headers 4.

For manufacturing the heat exchanger 1, these members are, for furnace brazing, placed in a temporarily-assembled state with these members lying on a conveyer. However, in this case, there is such a defect that the fins 2, the heat transfer pipes 3, and the headers 4 are brazed in a state shifted from an original position relationship depending on the degree of load application due to the way to bring the fins 2 and the headers 4 into contact with a conveyer surface.

Specifically, the header 4 includes structures such as a fluid distribution structure and a path coupling pipe, and therefore, deformation force is sometimes applied to the temporarily-assembled heat exchanger 1 due to a mass increase or generation of moment force. In the case of a structure in which a fin 2 side has a cutout recessed portion 2c for inserting the heat transfer pipe 3 from a surface direction of the fin 2, an opening end of the cutout recessed portion 2c is present. Thus, tendency shows that stiffness of the fin 2 itself is low or the fin becomes more sensitive to thermal deformation upon heating due to influence of residual stress at the point of insertion of the heat transfer pipes 3 into the fins 2 and the headers 4 upon temporal assembly. For these reasons, the structure of the heat exchanger 1 less causing deformation even when furnace brazing is performed and the method for manufacturing such a heat exchanger 1 will be described.

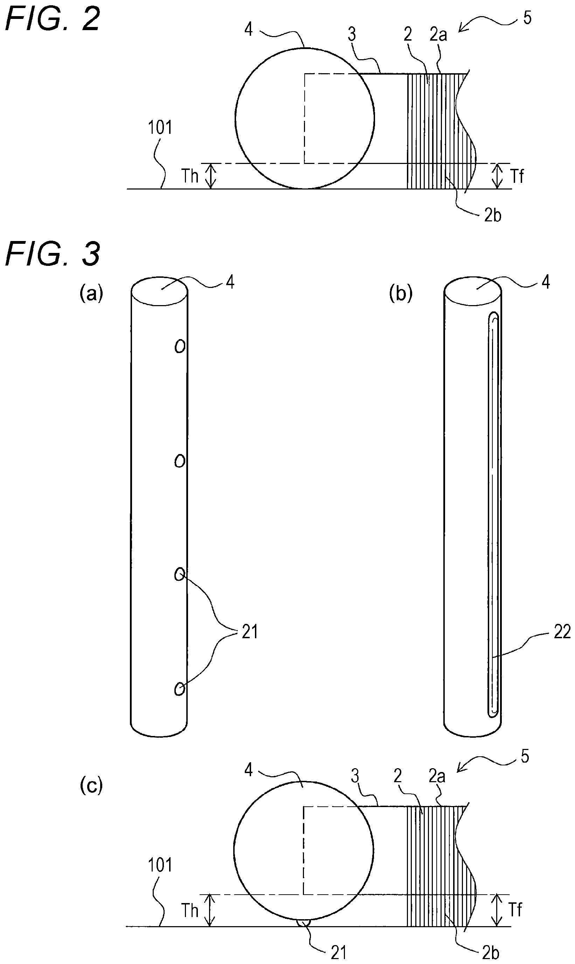

First, for forming the less-deformable heat exchanger 1 as described above, the protruding length Th of the fin 2 from the heat transfer pipe 3 and a distance from the heat transfer pipe 3 to an outer surface of the header 4 on the same side as the protrusion are set substantially equal to each other as illustrated in Fig. 2. Next, the heat exchanger manufacturing method for manufacturing the less-deformable heat exchanger 1 as described above will be described. In this manufacturing method, an assembled member 5 including the fins 2, the heat transfer pipes 3, and the headers 4 is joined by furnace brazing.

### (First Step)

The heat transfer pipes 3, the fins 2, and the headers 4 are temporarily assembled as in the above-described structure to form the assembled member 5. The size of each portion of each member described herein is, by assembly, set such that the protruding length Tf of the fin 2 from the heat transfer pipe 3 and the distance Th from the heat transfer pipe 3 to the outer surface of the header 4 on the same side as the protrusion are substantially equal to each other (Fig. 2).

### (Second Step)

As illustrated in Fig. 2, the assembled member 5 lies down, after the first step, such that a protruding length Tf side and a distance Th side are on a lower side and longitudinal directions of the headers 4 and the fins 2 are along the horizontal direction, and then, is placed on a conveyer 101. Note that the first step can be performed with the assembled member 5 lying down as described above. Alternatively, the first step may be performed on the conveyer 101. Note that not the assembled member 5 curved in the L-shape as illustrated in Fig. 1 but the linear assembled member 5 is placed on the conveyer 101. Curving in the L-shape as illustrated in Fig. 1 is performed by a step after a subsequent third step. When the linear assembled member 5 is placed on the conveyer 101, the linear assembled member 5 is placed on the conveyer 101 with a protruding portion 2b (Fig. 2) side thereof facing down.

### (Third Step)

After the second step, the assembled member 5 is conveyed into a furnace by the conveyer 101, and then, is heated for furnace brazing of the assembled member 5. Note that a brazing material is formed in advance on surfaces of the heat transfer pipes 3 or the fins 2 and surfaces of the headers 4. Thereafter, when the brazing material is cooled, the heat transfer pipes 3 are firmly joined to the fins 2 and the headers 4.

According to the heat exchanger manufacturing method and the heat exchanger 1 described above, the protruding length Tf of the fin 2 from the heat transfer pipe 3 and the distance Th from the heat transfer pipe 3 to the outer surface of the header 4 on the same side as the protrusion are set substantially equal to each other. Thus, a contact surface of the heat exchanger 1 (the assembled member 5) with a transportation unit such as the conveyer 101 for performing furnace brazing is in uniform contact. That is, the heat transfer pipes 3 are not inclined to one side, but are parallel to the conveyer 101. Thus, the amount of inclination of the fins 2, the heat transfer pipes 3, and the headers 4 can be decreased. Thus, the heat exchanger manufacturing method and the heat exchanger 1 can be provided such that each member is less inclined even when these members are joined by furnace brazing.

As described above, the amount of deformation of the fins 2, the heat transfer pipes 3, and the headers 4 can be suppressed low, and therefore, the well-looking heat exchanger 1 exhibiting favorable assemblability and leading to less occurrence of a clearance as a cause for degradation of performance of the heat exchanger 1 can be provided. Further, in a case where each heat transfer pipe 3 as the flat pipe is inserted into the fins 2 as in the present embodiment (see Fig. 1(b)), the present embodiment provides a significant effect that residual stress of the fins 2 and the heat transfer pipes 3 upon temporal assembly is relatively great and each member is less inclined. In a case where the heat transfer pipes 3 are the flat pipes (see Fig. 1(b)) and the direction of insertion of the heat transfer pipe 3 into the fin 2 is not perpendicular but inclined (see Fig. 1(a)) as in the present embodiment, the present embodiment provides a significant effect that residual stress is easily applied to the fins 2 and the heat transfer pipes 3 and each member is less inclined. Note that even when the direction of insertion of the heat transfer pipe 3 into the fin 2 is perpendicular, the effect that each member is less inclined is also provided.

### [Second Embodiment]

In an embodiment below, reference numerals similar to those of the first embodiment are used to represent members and the like common to those of the first embodiment, and detailed description thereof will be omitted. First, a difference of the second embodiment from the first embodiment is that multiple substantially-hemispherical small raised portions 21 arranged at equal intervals are, for example, formed in line in a longitudinal direction of a header 4 at an outer surface of the header 4 as illustrated in Fig. 3(a).

Alternatively, a thin straight line-shaped raised portion 22 may be formed in the longitudinal direction of the header 4 at the outer surface of the header 4 as illustrated in Fig. 3(b). As illustrated in Fig. 3(c), when an assembled member 5 is formed, the raised portions 21 or the raised portion 22 are formed on the same side as a protrusion with a protruding length Tf at the header 4. Thus, the header 4 contacts a conveyer 101 through the raised portions 21 or the raised portion 22. In addition, the protruding length Tf and a distance Th are set substantially equal to each other, a length from a heat transfer pipe 3 to a tip end of the raised portion 21 (22) being taken as the distance Th. According to the present embodiment, advantageous effects similar to those of the first embodiment can be provided.

Moreover, in the present embodiment, the raised portions 21 (or the raised portion 22) as dot-shaped or linear protrusions are provided on a lower side of the header 4 in brazing. Thus, the header 4 and the conveyer 101 contact each other only through the raised portions 21 (or the raised portion 22), and therefore, the contact area of the header 4 with the conveyer 101 can be decreased. Consequently, degradation of an outer appearance of the assembled member 5 due to re-solidifying of brazing material drops can be reduced.

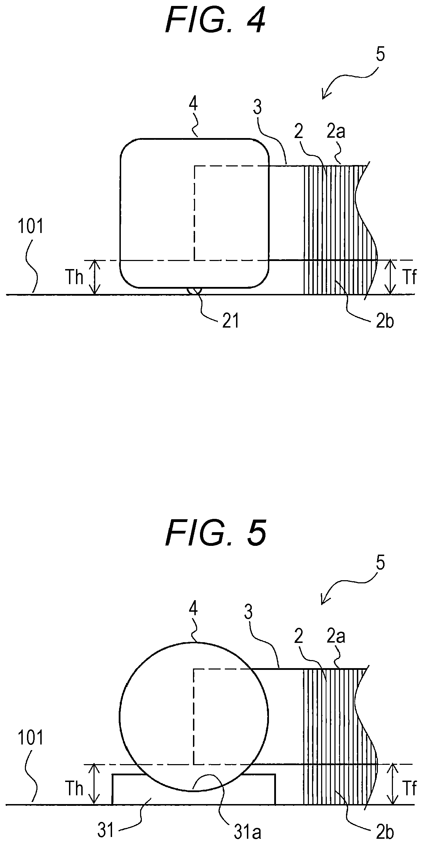

Note that when the conveyer 101 is in a mesh shape, the raised portions 21 as the dot-shaped protrusions might be dropped in a mesh, and for this reason, the raised portion 22 as the linear protrusion is preferably used. Fig. 4 is a variation of the present embodiment. A difference of an example of Fig. 4 from the embodiment of Fig. 3 is the sectional shape of the header 4 in a radial direction. In the example of Fig. 4, the sectional shape of the header 4 in the radial direction is a substantially rectangular shape with round-chamfered corner portions. In this case, the raised portions 21 (or the raised portion 22) are provided on the lower side of the header 4 in brazing.

Fig. 5 is another variation of the second embodiment. A difference of an example of Fig. 5 from the embodiment of Fig. 3 is that a plate-shaped seat 31 is used instead of the raised portions 21 and the raised portion 22. For the seat 31, a direction perpendicular to the plane of paper of Fig. 5 is a plate thickness direction, and an upper-to-lower direction of the plane of paper is a plate width direction. A cutout 31a matching the outer shape of the header 4 is formed at an upper portion of the seat 31, and the header 4 is fitted in the cutout 31a such that the header 4 is supported on the seat 31. Multiple plate-shaped seats 31 are arranged at certain intervals in the direction perpendicular to the plane of paper of Fig. 5, and support the header 4 from below at multiple spots in the longitudinal direction of the header 4. Moreover, the protruding length Tf and the distance Th are set substantially equal to each other, a length from the heat transfer pipe 3 to a lower end of the seat 31 being taken as the distance Th. Note that for avoiding brazing of the seat 31 to the header 4, the seat 31 is preferably made of a material different from those of the header 4 and the like.

In the variation of Fig. 5, contact of the header 4 with the conveyer 101 can be eliminated, and therefore, degradation of the outer appearance of the assembled member 5 due to re-solidifying of the brazing material drops can be reduced. Moreover, the raised portions 21 (or the raised portion 22) are not necessarily provided at the header 4 as in the examples of Figs. 3 and 5, and therefore, placement of a component unnecessary for a heat exchanger 1 as a completed product can be prevented.

### [Third Embodiment]

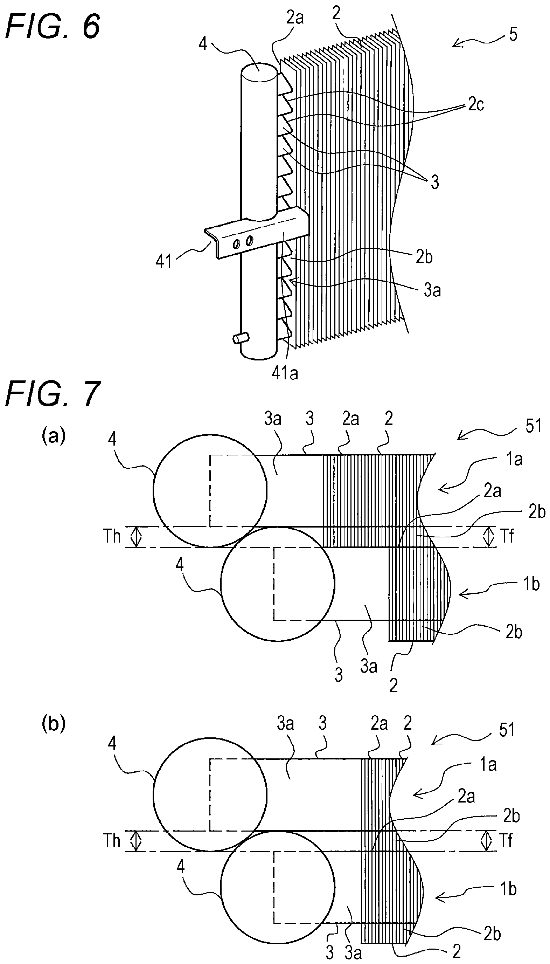

A difference of a third embodiment from the second embodiment is that an attachment member 41 for attaching a header 4 and therefore a heat exchanger 1 to a housing of an outdoor unit of an air-conditioner is used as illustrated in Fig. 6 instead of the raised portions 21, the raised portion 22, and the seat 31. That is, the attachment member 41 is attached to the header 4, and is provided as substitute for the seat 31. A protruding length Tf and a distance Th are set substantially equal to each other, a length from a heat transfer pipe 3 to an end portion 41a of a protruding portion of the attachment member 41 being taken as the distance Th. The attachment member 41 described herein is preferably made of the same type of material as that of the header 4 because the attachment member 41 is brazed to the header 4.

According to the present embodiment, contact of the header 4 with a conveyer 101 can be eliminated, and therefore, degradation of an outer appearance of an assembled member 5 due to re-solidifying of brazing material drops can be reduced. Moreover, the seat also serves as the attachment member 41, and therefore, assemblability of the outdoor unit of the air-conditioner can be improved.

### [Fourth Embodiment]

A fourth embodiment relates to the heat exchanger stacking method for stacking heat exchangers 1, which are assembled by brazing as described above, one above the other and a multi-row heat exchanger. Fig. 7(a) illustrates a multi-row heat exchanger 51. The heat exchangers 1 manufactured in the first embodiment or the second embodiment are often used in multiple rows (see Fig. 8). The multi-row heat exchanger 51 is intended to enhance the degree of adhesion between two heat exchangers 1.

As described above, a fin 2 protrudes from a heat transfer pipe 3 on one side of each fin 2 (a protruding portion 2b), but does not protrude from the heat transfer pipe 3 on the other side (a side portion 2a). In the present embodiment, the protruding length Tf of the fin 2 from the heat transfer pipe 3 and a distance Th from the heat transfer pipe 3 to an outer surface of a header 4 on a side opposite to the protrusion are set substantially equal to each other. In an example of Fig. 7, the distance Th from the heat transfer pipe 3 to the outer surface of the header 4 on the same side as the protrusion with the protruding length Tf is also set equal to the protruding length Tf.

Two heat exchangers 1, i.e., a heat exchanger 1a and a heat exchanger 1b, are prepared. As illustrated in Fig. 7(a), the heat exchanger 1a and the heat exchanger 1b are stacked one above the other with the heat exchanger 1a being on an upper side and the heat exchanger 1b being on a lower side. In this state, the fins 2 are set such that tip end portions of the protruding portions 2b of the heat exchanger 1a and tip end portions of the heat exchanger 1b on a non-protruding side (a side portion 2a side) contact each other. Moreover, these two heat exchangers are stacked one above the other in a state in which the headers 4 of the heat exchanger 1b of which fins 2 contact other fins 2 on the non-protruding side contact sections 3a, where no fins 2 are provided, of the heat transfer pipes 3 of the heat exchanger 1a. By such stacking, some of the fins 2 of the heat exchanger 1a do not contact the fins 2 of the heat exchanger 1b, and the headers 4 of the heat exchanger 1a and the headers 4 of the heat exchanger 1b are offset from each other in a residual flow direction in Fig. 7(a).

Note that in the example of Fig. 7(a), both of the heat exchanger 1a and the heat exchanger 1b have the protruding portions 2b facing down, and the headers 4 of the heat exchanger 1b positioned on the lower side contact the sections 3a of the heat exchanger 1a positioned on the upper side. However, the present invention is not limited to such a configuration. The protruding portions 2b of both of the heat exchanger 1a and the heat exchanger 1b may face up, and the headers 4 of the heat exchanger 1a positioned on the upper side may contact the sections 3a of the heat transfer pipes 3 of the heat exchanger 1b positioned on the lower side.

A difference of the example of Fig. 7(b) from Fig. 7(a) is that the heat exchanger 1b has a shorter distance of the section 3a, where no fins 2 are formed, of the heat transfer pipe 3 than that of the heat exchanger 1a and the fins 2 of the heat exchanger 1a and the fins 2 of the heat exchanger 1b have no portions where the fins 2 do not contact the fins 2 of the other heat exchangers. Fig. 8 includes a perspective view (a) and an upper view (b) of the entirety of the multi-row heat exchanger 51 of Fig. 7(a). According to the multi-row heat exchanger 51 of the present embodiment, a clearance between the row of the heat exchanger 1a and the row of the heat exchanger 1b is less caused, and therefore, the degree of adhesion can be enhanced. Thus, in a case where the multi-row heat exchanger 51 is directly placed at an outdoor unit of an air-conditioner, the multi-row heat exchanger 51 can exhibit a high degree of adhesion between the heat exchangers 1. Thus, a high-performance heat exchanger exhibiting favorable assemblability and having a high density and a small ground contact area can be provided.

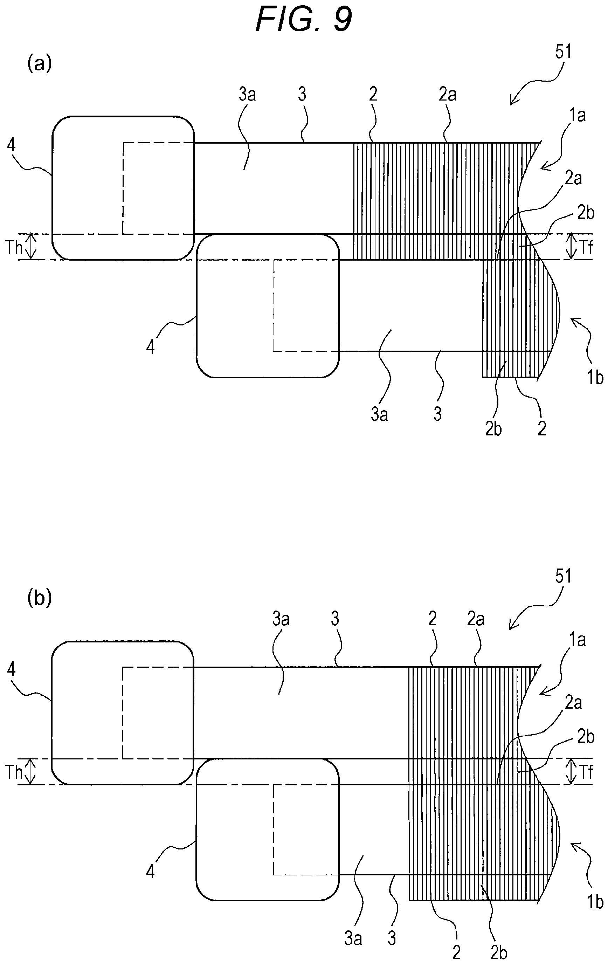

Figs. 9(a) and 9(b) are each variations of Figs. 7(a) and 7(b), and are different in that the sectional shape of the header 4 in a radial direction is a substantially rectangular shape with round-chamfered corner portions. Note that heat exchangers 1 including raised portions 21 or a raised portion 22 at each header 4 as in the second embodiment may be used to form the multi-row heat exchanger 51. As long as no interference with stacking of the heat exchangers 1 is caused, heat exchangers 1 including attachment members 41 as in the third embodiment may be used.

### LIST OF REFERENCE NUMERALS

- 1: heat exchanger
- 2: fin
- 2a: side portion
- 2c: cutout recessed portion
- 3: heat transfer pipe
- 3a: section of heat transfer pipe
- 4: header
- 21: raised portion
- 22: raised portion
- 31: seat
- 41: attachment member
- 41a: end portion of protruding portion
- 51: multi-row heat exchanger
- 101: conveyer
- Tf: protruding length
- Th: distance

## Claims

1. A heat exchanger manufacturing method for manufacturing a heat exchanger (1) by brazing of multiple heat transfer pipes (3), multiple fins (2), and headers (4), the heat exchanger (1) including,
the multiple fins (2) arranged in a thickness direction,
the multiple heat transfer pipes (3) joined to each fin (2) with the heat transfer pipes (3) each being inserted into cutout recessed portions (2c) as cutouts of side portions (2a) of the fins (2) on one side, and
the headers (4) each joined to both end portions of each heat transfer pipe (3) to couple the multiple heat transfer pipes (3) and having internal spaces for collecting or distributing fluid flowing in the multiple heat transfer pipes (3), the method comprising:
a first step of assembling the heat transfer pipes (3), the fins (2), and the headers (4) to form an assembled member and setting such that a protruding length Tf of a protruding portion (2b) of each fin (2) from a corresponding one of the heat transfer pipes (3) and a distance Th from each heat transfer pipe (3) to an outer surface of a corresponding one of the headers (4) on the same side as the protruding portion (2b) are substantially equal to each other;
a second step of placing, after the first step, the assembled member on a conveyer (101) with the protruding length Tf side and the distance Th side facing down; and
a third step of conveying, after the second step, the assembled member into a furnace by the conveyer (101) to heat the assembled member, thereby performing brazing of the assembled member.

2. The heat exchanger manufacturing method according to claim 1, wherein
an attachment member (41) configured to attach each header (4) to a housing of an outdoor unit of an air-conditioner is provided at each header (4),
at the second step, each header (4) is placed on the conveyer (101) with the attachment member (41) facing down, and
a distance from each heat transfer pipe (3) to an end portion of a protruding portion (41a) of the attachment member (41) is the distance Th.

3. A heat exchanger (1) comprising:
multiple fins (2) arranged in a thickness direction;
multiple heat transfer pipes (3) joined to each fin (2) with the heat transfer pipes (3) each being inserted into cutout recessed portions (2c) as cutouts of side portions (2a) of the fins (2) on one side; and
headers (4) each joined to both end portions of each heat transfer pipe (3) to couple the multiple heat transfer pipes (3) and having internal spaces for collecting or distributing fluid flowing in the multiple heat transfer pipes (3),
wherein
a raised portion (21) is formed at the outer surface of each header (4),
wherein a protruding length Tf of each fin (2) from a corresponding one of the heat transfer pipes (3) and a distance Th from each heat transfer pipe (3) to a tip end of the raised portion (21) are substantially equal to each other.

## Patentansprüche

1. Wärmetauscherherstellungsverfahren zum Herstellen eines Wärmetauschers (1) durch Hartlöten von mehreren Wärmeübertragungsrohren (3), mehreren Rippen (2) und Rohrverteilern (4), wobei der Wärmetauscher (1) Folgendes enthält:
mehrere Rippen (2), die in einer Dicken-Richtung angeordnet sind,
die mehreren Wärmeübertragungsrohre (3), die mit jeder Rippe (2) verbunden sind, wobei die Wärmeübertragungsrohre (3) jeweils in ausgeschnittene vertiefte Abschnitte (2c) als Ausschnitte von Seitenabschnitten (2a) der Rippen (2) auf einer Seite eingesetzt werden, und
die Rohrverteiler (4), die jeweils mit beiden Endabschnitten jedes Wärmeübertragungsrohrs (3) verbunden sind, um die mehreren Wärmeübertragungsrohre (3) zu koppeln, und Innenräume zum Sammeln oder Verteilen von Fluid, das in den mehreren Wärmeübertragungsrohren (3) fließt, aufweisen, wobei das Verfahren Folgendes umfasst:
einen ersten Schritt des Zusammenfügens der Wärmeübertragungsrohre (3), der Rippen (2) und der Rohrverteiler (4), um ein zusammengefügtes Element zu bilden, und des Einstellens in der Art, dass eine vorstehende Länge Tf eines vorstehenden Abschnitts (2b) jeder Rippe (2) von einem entsprechenden der Wärmeübertragungsrohre (3) und eine Entfernung Th von jedem Wärmeübertragungsrohr (3) zu einer Außenfläche eines entsprechenden der Rohrverteiler (4) auf derselben Seite wie der vorstehende Abschnitt (2b) im Wesentlichen gleich groß sind;
einen zweiten Schritt des Positionierens, nach dem ersten Schritt, des zusammengefügten Elements auf einem Transportband (101), wobei die Seite der vorstehende Länge Tf und die Seite der Entfernung Th nach unten zeigen; und
einen dritten Schritt des Beförderns, nach dem zweiten Schritt, des zusammengefügten Elements in einen Ofen durch das Transportband (101), um das zusammengefügte Element zu erhitzen und dadurch ein Hartlöten des zusammengefügten Elements durchzuführen.

2. Wärmetauscherherstellungsverfahren nach Anspruch 1, wobei
ein Befestigungselement (41), das konfiguriert ist, jeden Rohrverteiler (4) an einem Gehäuse einer Außeneinheit einer Klimaanlage zu befestigen, an jedem Rohrverteiler (4) vorgesehen ist,
in dem zweiten Schritt jeder Rohrverteiler (4) auf dem Transportband (101) positioniert wird, wobei das Befestigungselement (41) nach unten zeigt, und
eine Entfernung von jedem Wärmeübertragungsrohr (3) zu einem Endabschnitt eines vorstehenden Abschnitts (41a) des Befestigungselements (41) die Entfernung Th ist.

3. Wärmetauscher (1), der Folgendes umfasst:
mehrere Rippen (2), die in einer Dickenrichtung angeordnet sind;
mehrere Wärmeübertragungsrohre (3), die mit jeder Rippe (2) verbunden sind, wobei die Wärmeübertragungsrohre (3) jeweils in ausgeschnittene vertiefte Abschnitte (2c) als Ausschnitte von Seitenabschnitten (2a) der Rippen (2) auf einer Seite eingesetzt werden, und
Rohrverteiler (4), die jeweils mit beiden Endabschnitten jedes Wärmeübertragungsrohrs (3) verbunden sind, um die mehreren Wärmeübertragungsrohre (3) zu koppeln, und Innenräume zum Sammeln oder Verteilen von Fluid, das in den mehreren Wärmeübertragungsrohren (3) fließt, aufweisen,
wobei
ein erhöhter Abschnitt (21) an der Außenfläche jedes Rohrverteilers (4) gebildet ist,
wobei eine vorstehende Länge Tf jeder Rippe (2) von einem entsprechenden der Wärmeübertragungsrohre (3) und eine Entfernung Th von jedem Wärmeübertragungsrohr (3) zu einem Spitzenende des erhöhten Abschnitts (21) im Wesentlichen gleich groß sind.

## Revendications

1. Procédé de fabrication d'échangeur de chaleur pour fabriquer un échangeur de chaleur (1) par brasage de multiples tubes de transfert de chaleur (3), de multiples ailette (2), et de collecteurs (4), l'échangeur de chaleur (1) incluant
les multiples ailettes (2) agencées dans une direction de l'épaisseur,
les multiples tubes de transfert de chaleur (3) joints à chaque ailette (2) avec les tubes de transfert de chaleur (3) étant insérés chacun jusque dans des portions évidées découpées (2c) en tant que découpes de portions latérales (2a) des ailettes (2) sur un côté, et
les collecteurs (4) étant joints chacun aux deux portions d'extrémité de chaque tube de transfert de chaleur (3) pour coupler les multiples tubes de transfert de chaleur (3) et ayant des espaces internes pour collecter ou distribuer un fluide s'écoulant dans les multiples tubes de transfert de chaleur (3), le procédé comprenant :
une première étape consistant à assembler les tubes de transfert de chaleur (3), les ailettes (2), et les collecteurs (4) pour former un élément assemblé et à les installer de telle sorte qu'une longueur de projection Tf d'une portion en projection (2b) de chaque ailette (2) depuis un tube correspondant des tubes de transfert de chaleur (3) et une distance Th depuis chaque tube de transfert de chaleur (3) jusqu'à une surface extérieure d'un collecteur correspondant parmi les collecteurs (4) sur le même côté que la portion en projection (2b) sont sensiblement égales l'une à l'autre ;
une deuxième étape consistant à placer, après la première étape, l'élément assemblé sur un convoyeur (101) avec le côté de la longueur de projection Tf et le côté de la distance Th tournés vers le bas ; et
une troisième étape consistant à convoyer, après la deuxième étape, l'élément assemblé jusque dans un four via le convoyeur (101) pour chauffer l'élément assemblé, effectuant ainsi un brasage de l'élément assemblé.

2. Procédé de fabrication d'échangeur de chaleur selon la revendication 1, dans lequel
un élément de fixation (41) configuré pour fixer chaque collecteur (4) à un boîtier d'une unité externe d'un appareil de conditionnement d'air est prévu au niveau de chaque collecteur (4),
à la seconde étape, chaque collecteur (4) est placé sur le convoyeur (101) avec l'élément de fixation (41) tourné vers le bas, et
une distance depuis chaque tube de transfert de chaleur (3) jusqu'à une portion d'extrémité d'une portion en projection (41a) de l'élément de fixation (41) est la distance Th.

3. Échangeur de chaleur (1) comprenant :
de multiples ailettes (2) agencées dans une direction de l'épaisseur ;
de multiples tubes de transfert de chaleur (3) joints à chaque ailette (2) avec les tubes de transfert de chaleur (3) étant insérés chacun jusque dans des portions évidées découpées (2c) en tant que découpes de portions latérales (2a) des ailettes (2) sur un côté ; et
des collecteurs (4) joints chacun aux deux portions d'extrémité de chaque tube de transfert de chaleur (3) pour coupler les multiples tubes de transfert de chaleur (3) et ayant des espaces internes pour collecter ou distribuer un fluide s'écoulant dans les multiples tubes de transfert de chaleur (3),
dans lequel une portion surélevée (21) est formée au niveau de la surface extérieure de chaque collecteur (4),
dans lequel une longueur de projection Tf de chaque ailette (2) depuis un tube correspondant parmi les tubes de transfert de chaleur (3) et une distance Th depuis chaque tube de transfert de chaleur (3) jusqu'à une extrémité de pointe de la portion surélevée (21) sont sensiblement égales l'une à l'autre.
